# EUROPEAN PATENT APPLICATION

(11) **EP 4 644 317 A1**
(43) Date of publication of application: **05.11.2025**
(21) Application number: 23911720.3
(22) Date of filing: 13.12.2023
(51) Int. Cl.: C01B 32/17, H01M 4/62, H01M 4/139

(54) **CARBON NANOTUBES AND METHOD FOR PURIFYING SAME, CARBON NANOTUBE DISPERSION, BINDER COMPOSITION, ELECTRODE COMPOSITION, AND SECONDARY CELL**

(30) Priority: 28.12.2022 JP 2022211319
(71) Applicant: artience Co., Ltd., Chuo-ku Tokyo 104-0031 (JP); TOYOCOLOR CO., LTD., Tokyo 104-8381 (JP)
(72) Inventor: MATSUSHITA, Yuki, Tokyo 104-8381 (JP); MASUOKA, Tomoaki, Tokyo 104-8381 (JP); NONOYAMA, Yuma, Tokyo 104-8381 (JP)
(74) Representative: SSM Sandmair
(86) International application number: PCT/JP2023/044636
(87) International publication number: WO 2024/142939

(57) **Abstract**

The disclosure provides: carbon nanotubes capable of forming an electrode film having good conductivity while further enhancing safety, and a method for purifying the carbon nanotubes; and a carbon nanotube dispersion, a binder composition, an electrode composition, and a secondary cell containing the carbon nanotubes.

## Description

### Technical Field

An embodiment of the present invention relates to carbon nanotubes and a method for purifying the same, a carbon nanotube dispersion, a binder composition, an electrode composition, and a secondary cell.

### Description of Related Art

With the spread of electric vehicles and the trend toward smaller, lighter and more powerful portable devices, there is a demand for secondary cells having high energy density and, further, for such secondary cells with higher capacity. Under the circumstances, lithium-ion secondary cells in particular have come to be used in many devices.

In secondary cells, conductive additives such as carbon black, ketjen black, graphene, and fine carbon materials are used. Particularly, carbon nanotubes (hereinafter also referred to as "CNTs"), a type of fine carbon fiber, are widely used. For example, by adding CNTs to the electrode active material, the electrode resistance can be reduced, the load resistance of the cell can be improved, the material strength of the electrode can be increased, and the resistance to electrode expansion and contraction can be enhanced, thereby improving the rate characteristics and cycle life of secondary cells. Among these, multi-walled CNTs with an average outer diameter of 5 nm to several tens of nm are relatively inexpensive and are becoming widely practical.

CNTs can generally be manufactured by methods such as arc discharge, laser vaporization, and chemical vapor deposition. Among these, chemical vapor deposition is the most suitable for mass production from the viewpoint of productivity and economic efficiency, and is widely used in practice. In the chemical vapor deposition method, catalyst particles containing metals such as iron, cobalt, and nickel are used to react with a gas that serves as a carbon source to generate CNTs. Therefore, CNTs obtained by the chemical vapor deposition method contain catalyst particles containing metals such as iron, cobalt, and nickel, or particles of carbides or oxides derived from the catalyst particles. When CNTs containing catalyst particles containing metals are used in secondary cells, problems may occur such as the metal dissolving and precipitating, causing a short circuit in the cell. If a cell short-circuits, it can lead to serious accidents such as fire or explosion. Therefore, to enhance safety, several methods have been proposed to purify CNTs and remove catalyst particles containing metals.

Patent Literature 1 describes a method for purifying a carbon material containing CNTs that includes a carbon material production process and a halogen treatment process. In the carbon material production process, a raw material containing at least carbon and a catalyst metal is used as an anode to produce a carbon material containing CNTs by the arc discharge method. In the halogen treatment process, the carbon material is brought into contact with a gas containing halogen and/or a halogen compound. The purification method can remove impurities such as catalyst metals while suppressing damage or cutting of CNTs, or preventing CNTs from solidifying into lumps.

Patent Literature 2 describes that when liquid-phase oxidation is performed with nitric acid on CNTs (carbon nanotubes) having an intensity ratio (G/D ratio) of G band to D band of 50 or more in Raman spectroscopic analysis, CNTs of higher quality, without catalyst residue, with high heat resistance, and with less carbon by-products can be obtained.

### Related Art

### Patent Literature

Patent Literature 1: International Publication No. WO 2008/126534
Patent Literature 2: International Publication No. WO 2018/043487

### SUMMARY

### Technical Problem

However, when the halogen treatment process is applied to CNTs, although the catalyst metal is removed, the crystallinity of the CNTs becomes high due to the long-time calcination at high temperature. CNTs with high crystallinity become hard and thus more prone to breakage. Therefore, when using CNTs as a conductive additive in electrode films for secondary cells and the like, the CNTs may break, resulting in increased contact resistance between CNTs, and consequently, the conductivity of the electrode film may decrease, potentially leading to a decline in the performance of secondary cells containing CNTs.

Also, liquid-phase oxidation of the CNTs with nitric acid can reduce catalyst residues, but due to the strong oxidizing power of nitric acid, the surface of the CNTs may be oxidized, potentially lowering the conductivity of the electrode film using the CNTs.

An embodiment of the present invention has been made in view of the above circumstances, and aims to provide carbon nanotubes capable of forming an electrode film having good conductivity while further enhancing safety, and a method for purifying the carbon nanotubes, as well as a carbon nanotube dispersion, a binder composition, an electrode composition, and a secondary cell containing the carbon nanotubes.

### Solution to the Problem

In order to solve the above-mentioned problems, as a result of the present inventors' diligent research, carbon nanotubes satisfying the following conditions were discovered, and the present invention was completed.

That is to say, several aspects of the present invention are as follows.
<1> Carbon nanotubes satisfy the following (1) to (3).
   (1) In differential thermal analysis when heated from 200°C to 1000°C at a rate of 10°C/minute, an exothermic peak is observed between 600°C and 800°C inclusive.
   (2) In a Raman spectrum, when the maximum peak intensity within a range of 1560 to 1600 cm⁻¹ is defined as G, and the maximum peak intensity within a range of 1310 to 1350 cm⁻¹ is defined as D, a G/D ratio is 0.5 or more and 3.0 or less.
   (3) A total content of cobalt, iron, copper, zinc, nickel, chromium, manganese and molybdenum is 5000 ppm or less.
<2> The carbon nanotubes according to <1> satisfy the following (4).
   (4) A surface oxygen content is 2.5 atm% or less.
<3> The carbon nanotubes according to <1> or <2> further satisfy (i) a total content of cobalt and iron of 5000 ppm or less.
<4> The carbon nanotubes according to <3> further satisfy (ii) the total content of cobalt and iron of 1000 ppm or less.
<5> A carbon nanotube dispersion includes the carbon nanotubes according to any one of <1> to <4>, a dispersant, and a dispersion medium.
<6> A binder composition includes a carbon nanotube dispersion and a binder, and
   the carbon nanotube dispersion includes the carbon nanotubes according to any one of <1> to <4>, a dispersant, and a dispersion medium.
<7> An electrode composition includes a carbon nanotube dispersion and an electrode active material, and
   the carbon nanotube dispersion includes the carbon nanotubes according to any one of <1> to <4>, a dispersant, and a dispersion medium.
<8> A secondary cell includes an electrode film, and the electrode film
   is obtained using a carbon nanotube dispersion that includes the carbon nanotubes according to any one of <1> to <4>, a dispersant, and a dispersion medium,
   a binder composition that includes the carbon nanotube dispersion and a binder, or
   an electrode composition that includes the carbon nanotube dispersion and an electrode active material.
<9> A method for purifying carbon nanotubes includes: a first process in which carbon nanotubes are heat treated under an inert atmosphere at a temperature of 1000°C or higher and 2000°C or lower; and a second process in which the carbon nanotubes heat-treated in the first process are contacted with an acid, and
   the first process and the second process are each performed once or twice or more.
<10> In the second process of the method for purifying the carbon nanotubes according to <9>, the acid has a standard electrode potential of 0.8 V vs. SHE or less.

### Effects

According to an embodiment of the present invention, carbon nanotubes that enable the formation of an electrode film having good conductivity while further enhancing safety and a method for purifying the carbon nanotubes can be provided. Additionally, a carbon nanotube dispersion, a binder composition, an electrode composition, and a secondary cell containing the carbon nanotubes can be provided.

### BRIEF DESCRIPTION OF THE DRAWINGS

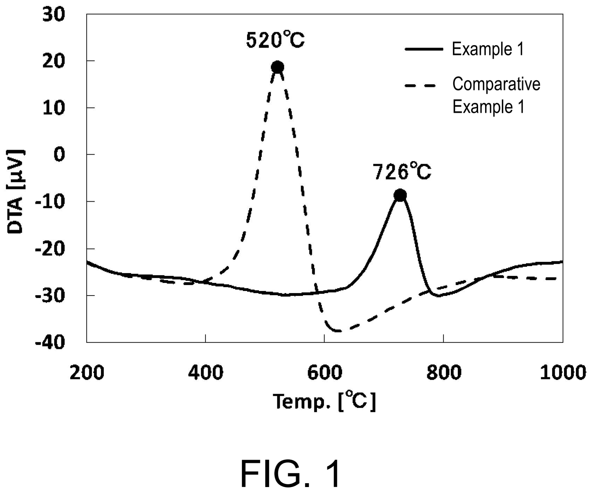

FIG. 1 is a graph showing the DTA curves of CNTs prepared in Example 1 and Comparative Example 1.

### DESCRIPTION OF EMBODIMENTS

The following provides a detailed description of carbon nanotubes, a carbon nanotube dispersion, a binder composition, an electrode composition, and a secondary cell in an embodiment of the present invention.

Hereinafter, carbon nanotubes are also referred to as CNTs.

### <Carbon nanotubes (CNTs)>

The CNT according to the embodiment satisfies the following (1) to (3).
(1) In differential thermal analysis when heated from 200°C to 1000°C at a rate of 10°C/minute, an exothermic peak is observed between 600°C and 800°C inclusive.
(2) In the Raman spectrum, when the maximum peak intensity within a range of 1560 to 1600 cm⁻¹ is defined as G, and the maximum peak intensity within a range of 1310 to 1350 cm⁻¹ is defined as D, the G/D ratio is 0.5 or more and 3.0 or less.
(3) The total content of cobalt, iron, copper, zinc, nickel, chromium, manganese and molybdenum is 5000 ppm or less.
   Furthermore, the CNTs according to the embodiment may satisfy the following (4).
(4) The surface oxygen content is 2.5 atm% or less.

The CNTs according to the embodiment satisfy at least the above (1) to (3), but it is preferable that the CNTs satisfy all of (1) to (4) above. Each condition is described below.

### <(1) Exothermic peak>

The CNTs of the embodiment have an exothermic peak at 600°C or higher and 800°C or lower in differential thermal analysis (DTA) when heated from 200°C to 1000°C at a rate of 10°C/min. The exothermic peak can be measured by performing differential thermal analysis on the CNTs under an air atmosphere. DTA is a method for measuring the temperature difference between a sample and a reference material as a function of temperature while changing the temperature of the sample and the reference material under constant conditions, and complies with JIS K 0129. In the DTA curve created based on the change in temperature difference between the sample and the reference material, the largest peak is defined as the exothermic peak.

Heat generation occurs accompanying the combustion of CNTs. As the combustion start temperature of the CNTs increases, the exothermic peak temperature also increases. Factors affecting changes in the combustion start temperature of the CNTs include the content of the catalyst metal, the degree of oxidation on the CNT surface, and the crystallinity of the CNTs. When the heat storage capacity of the catalyst metal contained in the CNTs is high, if the content of the catalyst metal is low, the total heat storage amount in all catalyst metals becomes small. Due to the small total heat storage amount in the catalyst metal, there may be cases where the temperature required to combust the CNTs becomes higher compared to when the content of the catalyst metal is high. In addition to the catalyst metal, metal impurities may be mixed into the CNTs during the CNT manufacturing process, and such metal impurities can also affect the total heat storage amount.

Also, the sites on the CNT surface that possess oxygen-containing functional groups are more combustible compared to the sites without functional groups. Therefore, the less oxygen-containing functional groups (i.e., the less surface oxygen content), the more difficult it is for the CNTs to combust, and the lower the degree of oxidation on the CNT surface, the higher the temperature required to combust the CNTs. Furthermore, the higher the crystallinity of the CNTs, the higher the combustion start temperature of the CNTs. The crystallinity of the CNTs can be expressed by the G/D ratio, which will be described later.

Since the combustion start temperature of the CNTs is within an appropriate temperature range, the impurities contained in the CNTs are reduced, enabling the obtainment of the CNTs with higher safety. In the embodiment, it is preferable that the temperature of the exothermic peak be 600°C or higher, and more preferably 650°C or higher. Additionally, it is preferable that the temperature of the exothermic peak be 800°C or lower, and more preferably 740°C or lower. When the temperature of the exothermic peak is 600°C or higher, the metal content is low, which can improve the safety of the cell. Alternatively, the surface oxygen content is low, resulting in exemplary conductivity. When the temperature of the exothermic peak is 800°C or lower, the crystallinity of the CNTs is not excessively high, which can suppress the breakage of the CNTs and inhibit the deterioration in performance of the secondary cell. For example, it is preferable that the temperature be 600°C or higher and 800°C or lower, 630°C or higher and 750°C or lower, or 650°C or higher and 740°C or lower.

In the case where CNTs are in powder form before dispersion, the exothermic peak can be measured directly. Additionally, when the CNTs are present in a CNT dispersion, the exothermic peak can be identified from the shape thereof after removing the dispersion medium by heat drying and then measuring. It is preferable to perform the heat drying at a temperature that does not oxidize the CNTs (for example, 140°C or lower). In cases where the CNT dispersion includes components other than the CNTs and the dispersion medium (such as additives), the exothermic peak of the additives may be measured in advance, and by identifying the exothermic peak derived from the additives, the remaining exothermic peak may be determined to be derived from the CNTs, thus identifying the exothermic peak.

### <(2) G/D ratio>

The G/D ratio (peak ratio of G-band to D-band) of the CNT in the embodiment is determined by Raman spectroscopy. While there are various laser wavelengths used in Raman spectroscopy, the embodiment utilizes 532 nm and 632 nm. In the Raman spectrum, the Raman shift observed around 1,590 cm⁻¹ is called the G-band derived from graphite, and the Raman shift observed around 1,350 cm⁻¹ is called the D-band derived from amorphous carbon and graphite defects. Since the wavenumber of Raman spectroscopy may vary depending on the measurement conditions, the wavenumber specified here is defined as the wavenumber ±10 cm⁻¹. Carbon nanotubes with a higher G/D ratio have higher crystallinity. Also, when carbon nanotubes are calcined at high temperatures, the G/D ratio tends to increase, and the longer the calcination time, the higher the G/D ratio tends to be.

For CNTs, when the maximum peak intensity in the range of 1560 to 1600 cm⁻¹ in the Raman spectrum is designated as G, and the maximum peak intensity in the range of 1310 to 1350 cm⁻¹ is designated as D, the G/D ratio is 0.5 or more and 3.0 or less, and the G/D ratio is more preferable to be 0.5 or more and 2.5 or less, further preferable to be 0.5 or more and 2.0 or less, particularly preferable to be 0.5 or more and 1.5 or less, and even more preferable to be 0.5 or more and 1.3 or less. If the G/D ratio of the CNTs exceeds the above range, the CNTs become harder, making the CNTs more susceptible to damage during dispersion, which may increase contact resistance. On the other hand, if the G/D ratio of the CNTs falls below the above range, the conductivity of the CNTs themselves tends to decrease. Due to the factors, when the G/D ratio of the CNTs is within the above range, the rate characteristics and cycle characteristics are improved in secondary cells using electrode films made with CNT dispersions.

Conventionally, when purifying CNTs by applying a halogen treatment process to the raw CNTs, there is a tendency for the crystallinity of the CNTs to increase due to the high-temperature, long-duration calcination of the CNTs. Such a state can be confirmed by the high G/D ratio. On the other hand, in the embodiment, in the purification process of the CNTs, the heat treatment of the CNTs is performed under an inert atmosphere with a low upper temperature limit for a short time, which can suppress the high crystallization of the CNTs. In other words, the increase in the G/D ratio of the CNTs may be suppressed. When using low-crystallinity CNTs, in the process of manufacturing the electrode film, the bending of the CNTs can be suppressed during dispersion treatment and other processes, and the increase in contact resistance between the CNTs in the obtained electrode film can be suppressed. As a result, low-crystallinity CNTs can obtain good conductivity as an electrode film, and secondary cells containing the CNTs can exhibit good performance.

### <(3) Total metal content>

In the embodiment, it is preferable that the total content of cobalt, iron, copper, zinc, nickel, chromium, manganese and molybdenum in the CNTs be 5000 ppm or less, more preferably 3000 ppm or less, even more preferably 2500 ppm or less, still more preferably 1000 ppm or less, and yet more preferably 830 ppm or less. When the total content of the metals is within the above range, the safety of the secondary cell is improved. In the following description, cobalt, iron, copper, zinc, nickel, chromium, manganese and molybdenum may be collectively referred to simply as metals.

Here, the content of metals contained in the CNTs is the mass when converted to metal simple substances. In the CNTs, metals may be included as metal simple substances, metal oxides, metal composite oxides, etc., but the content of the metals is determined by converting the metals to metal simple substances.

In the CNTs, cobalt, iron, copper, zinc, nickel, chromium, manganese and molybdenum can be included as metal simple substances, metal oxides, and composite oxides thereof, respectively. It is desirable to reduce the total content of the metals, as the metals can be the cause of short circuits.

More preferably, from the viewpoint of stricter safety, in the CNTs, it is preferable that the total content of cobalt and iron is 5000 ppm or less, more preferably 3000 ppm or less, further preferably 2500 ppm or less, and even more preferably 1000 ppm or less.

Furthermore, preferably, in the CNTs, it is preferable that the total content of cobalt be 5000 ppm or less, more preferably 3000 ppm or less, even more preferably 2500 ppm or less, and still more preferably 1000 ppm or less.

Also, in the CNTs, it is preferable that the total content of iron be 5000 ppm or less, more preferably 3000 ppm or less, even more preferably 2500 ppm or less, and still more preferably 1000 ppm or less.

In the CNTs, cobalt, iron, copper, zinc, nickel, chromium, manganese and molybdenum can be included as derived from catalyst metals. In addition to metals and metal oxides used as catalyst metals, metals such as stainless steel used in synthesis equipment, filling equipment, or piping may be mixed into the CNTs due to wear and tear. Therefore, in the CNTs, cobalt, iron, copper, zinc, nickel, chromium, manganese and molybdenum can also be metals not derived from catalyst metals.

In the embodiment, the total content of metals contained in the CNTs can be reduced by dissolving the exposed metals with acid after calcining the CNTs as in the method for purifying the CNTs to be described later. By reducing the total content of cobalt, iron, copper, zinc, nickel, chromium, manganese and molybdenum contained in the CNTs, the temperature of the exothermic peak can be increased, and CNTs with improved safety can be obtained. Secondary cells containing such CNTs can exhibit good performance.

The content of metals contained in the CNTs can be calculated by, for example, acid decomposing the CNTs, extracting the metals contained in the CNTs, and analyzing the extract using Inductively Coupled Plasma (ICP). The total content of cobalt, iron, copper, zinc, nickel, chromium, manganese and molybdenum contained in the CNTs is expressed as the mass ratio (ppm) of the total content of extracted cobalt, iron, copper, zinc, nickel, chromium, manganese and molybdenum to the mass of the CNTs before metal extraction. Here, the total content of cobalt, iron, copper, zinc, nickel, chromium, manganese and molybdenum is determined by calculating the mass of each of the metals converted to the metal simple substance thereof and summing up the amounts.

### <(4) Surface oxygen content>

In the embodiment, the surface oxygen content of the CNTs is preferably 2.5 atm% or less from the viewpoint of conductivity of the CNTs, more preferably 1.9 atm% or less, further preferably 1.4 atm% or less, and particularly preferably 1.2 atm% or less. When the surface oxygen content is 2.5 atm% or less, the CNTs possess exemplary conductivity as an electrode film. In the specification, "surface oxygen content" refers to the value expressed by the ratio (atm%) of oxygen atoms to carbon atoms on the surface of the CNTs as determined by X-ray photoelectron spectroscopy.

When nitric acid is used for purification of the raw material CNTs, the strong oxidizing power of nitric acid causes oxidation of the CNT surface. On the other hand, in the embodiment, as in the method for purifying the CNTs described later, by heat treating the raw material CNTs to expose metals and dissolving the metals with a strongly acidic but low oxidizing power acid, oxidation of the CNT surface can be suppressed and the surface oxygen content of the CNTs can be reduced. As a result, the combustion start temperature of the CNTs becomes higher, and the CNTs can obtain good conductivity as an electrode film, and secondary cells containing the CNTs can exhibit good performance.

### <(5) Other>

The CNTs possess a structure of graphite rolled into a cylindrical shape. The CNTs may be a mixture of single-walled CNTs and multi-walled CNTs. Single-walled CNTs have a structure in which a single layer of graphite is rolled into a cylindrical shape. Multi-walled CNTs have a structure in which two or three or more layers of graphite are rolled into a cylindrical shape. The CNTs in the disclosure may not include single-walled CNTs, and multi-walled CNTs are preferred. Alternatively, the CNTs may be a mixture of single-walled CNTs and multi-walled CNTs, but even in such cases, CNTs including 90 mass% or more of multi-walled CNTs are preferred, and CNTs including 99 mass% or more of multi-walled CNTs are more preferred. By using such CNTs, it becomes easier to achieve a suitable range for the G/D ratio, for example, 0.5 or more and 3.0 or less. Additionally, the sidewalls of the CNTs do not necessarily need to have a graphite structure. For example, CNTs with sidewalls having an amorphous structure can also be used as CNTs.

In the embodiment, it is preferable that the CNTs be multi-walled CNTs, and it is preferable that the number of layers of the CNTs be 3 layers or more and 30 layers or less, it is more preferable that the number of layers of the CNTs be 3 layers or more and 20 layers or less, and it is even more preferable that the number of layers of the CNTs be 3 layers or more and 10 layers or less.

The purity of CNTs is expressed as the value (mass%) obtained by subtracting the ash content (mass%) from the mass of the CNTs. The ash content (mass%) of the CNTs can be measured, for example, in accordance with JIS K 6218-2. The ash of the CNTs is a non-combustible component containing metals and other substances. From the viewpoint of conductivity, the purity of the CNTs is preferably 90 mass% or more, more preferably 95 mass% or more, and even more preferably 99 mass% or more, based on the mass of the CNTs. Also, the non-combustible component contained in the CNTs is preferably 10 mass% or less, more preferably 5 mass% or less, and even more preferably 1 mass% or less.

The volume resistivity of the CNTs in the embodiment is preferably 1.0×10⁻² to 2.5×10⁻² Ω·cm, more preferably 1.0×10⁻² to 2.2×10⁻² Ω·cm, even more preferably 1.0×10⁻² to 2.0×10⁻² Ω·cm, and particularly preferably 1.2×10⁻² to 1.8×10⁻² Ω·cm. When the volume resistivity of the CNTs is within the above range, the volume resistivity of the electrode film is reduced, and the performance of the secondary cell is improved. The volume resistivity of the CNTs can be measured using a powder resistivity measuring device (manufactured by Nitto Seiko Analytic Co., Ltd.: Lorester GP Powder Resistivity Measurement System MCP-PD-51).

In the embodiment, the BET specific surface area of the CNTs is preferably 150m²/g or more, and more preferably 180m²/g or more. Also, the BET specific surface area of the CNTs is preferably 800m²/g or less, more preferably 600m²/g or less, and even more preferably 400m²/g or less. The BET specific surface area of the CNTs can be calculated by the BET method using nitrogen adsorption measurement. In many cases, there is a correlation between the specific surface area of the CNTs and the average outer diameter of the CNTs, with a smaller specific surface area resulting in a larger outer diameter of the CNTs and fewer CNTs per unit mass. On the other hand, the larger the specific surface area of the CNTs, the smaller the outer diameter of the CNTs, and the more CNTs per unit mass. When the specific surface area of the CNTs is 150m²/g or more, a sufficient number of carbon nanotubes per unit mass can be secured, and an efficient conductive network can be formed, thereby obtaining exemplary rate characteristics and cycle characteristics of the secondary cell. Also, when the specific surface area of the CNTs is 800m²/g or less, the dispersion of the CNTs is good, and a good conductive network can be formed in the electrode film.

The average outer diameter of the CNTs in the embodiment is preferably 3 nm or more, and more preferably 5 nm or more. Additionally, the average outer diameter of the CNTs is preferably 15 nm or less, more preferably 13 nm or less, and even more preferably 11 nm or less. When the average outer diameter of the CNTs is 15 nm or less, a sufficient number of carbon nanotubes per unit mass can be secured, enabling the efficient formation of a conductive network. When the average outer diameter of the CNTs is 3 nm or more, the dispersion of the CNTs is favorable, and a good conductive network can be formed in the electrode film.

The standard deviation of the average outer diameter of the CNTs is preferably 2 nm or more and 8 nm or less, and more preferably 3 nm or more and 6 nm or less. When the standard deviation of the average outer diameter of the CNTs is large, it may be difficult to efficiently form a conductive network. In such cases, the CNTs may agglomerate by entangling with each other in the CNT dispersion or composite slurry and/or in the electrode film, prohibiting the formation of a good conductive network.

The outer diameter and average outer diameter of CNTs are determined as follows. First, the CNTs are observed and imaged using a transmission electron microscope. Next, 300 CNTs are randomly selected in the observed images, and the respective outer diameters thereof are measured. Then, the average outer diameter (nm) of the CNTs is calculated as the number average of the outer diameters.

CNTs typically exist as aggregates. The configuration may be, for example, a state where a single CNT is intricately entangled (entangled state). The configuration may also be an aggregate of CNTs that have been straightened (bundled state). Bundled CNT aggregates are easier to disentangle compared to entangled CNT aggregates. Furthermore, bundled CNT aggregates have better dispersibility than entangled CNT aggregates, making bundled CNT aggregates more suitable for use as CNTs.

According to the embodiment, by satisfying at least the above (1) to (3), CNTs that can form an electrode film having good conductivity while further enhancing safety may be obtained, and a secondary cell including such CNTs can exhibit good performance.

### <Method for manufacturing carbon nanotubes (CNTs)>

The CNTs of the embodiment can be manufactured by, for example, a laser ablation method, an arc discharge method, a thermal CVD method, a plasma CVD method and a combustion method, but are not limited thereto. For instance, the CNTs can be manufactured by reacting a carbon source with a catalyst metal at 500 to 1000°C in an atmosphere with an oxygen concentration of 1 volume% or less. The carbon source may be at least one of hydrocarbons and alcohols.

The raw gas serving as the carbon source for the CNTs can be any conventionally known material. For example, carbon-containing raw gases such as hydrocarbons represented by methane, ethylene, propane, butane and acetylene, carbon monoxide, and alcohols can be used, but are not limited thereto. Particularly from the viewpoint of ease of use, it is preferable to use at least one of hydrocarbons and alcohols as the raw gas.

### <Method for purifying carbon nanotubes (CNTs)>

The following describes a method for purifying carbon nanotubes (CNTs). It should be noted that the CNTs of the embodiment are not limited to the CNTs manufactured through the purification method described below, but the CNTs of the embodiment can be obtained by following the purification method described below.

The method for purifying the CNTs in the embodiment includes a first process in which carbon nanotubes in a raw material state are heat treated under an inert atmosphere at 1000°C or higher and 2000°C or lower and a second process in which the carbon nanotubes heat-treated in the first process are contacted with an acid. The first process and the second process may each be performed once or twice or more.

### (First process)

First, the raw material CNTs are heat treated under an inert atmosphere. By this, the CNTs are calcined. Examples of the inert atmosphere include a nitrogen atmosphere, an argon atmosphere, a vacuum atmosphere, and a combination thereof.

The heat treatment conditions, such as heat treatment temperature and heat treatment time, can be appropriately determined according to the type of CNTs and the types of metals derived from catalyst metals and other sources contained in the CNTs. The heat treatment temperature is preferably a temperature at which all metals including cobalt, iron, copper, zinc, nickel, chromium, manganese and molybdenum begin to melt. Additionally, since the catalyst metals used in the manufacture of the CNTs are at the nano level, and due to the nano-size effect, the catalyst metals melt at lower temperatures than bulk metals, the heat treatment temperature can be lower than the melting temperature of the bulk metals. From such perspective, the heat treatment temperature is preferably 1000°C or higher and 2000°C or lower. From the view point of suppressing high crystallization of the CNTs, the heat treatment temperature may be 1800°C or lower, 1400°C or lower, or 1200°C or lower. Furthermore, the heat treatment time can be appropriately set according to the calcination equipment and calcination scale, but for example, 1 to 3 hours is preferable.

By means of the above-mentioned heat treatment, the metals contained in the CNTs can be melted, and by removing the amorphous carbon on the CNT surface, the metals can be exposed on the CNT surface, thereby promoting contact between the metals and the acid in the second process to be described later. Additionally, normally, CNTs oxidize and combust at temperatures above 500°C under an air atmosphere. However, in the first process, the heat treatment is conducted under an inert atmosphere and at a relatively low temperature, thus suppressing the combustion of the CNTs themselves. Furthermore, by heat treating the CNTs under an inert atmosphere, oxidation of the CNT surface can be suppressed. Moreover, the heat treatment time may be made short, in which case the high crystallization of the CNTs can be further suppressed.

### (Second process)

Next, the CNTs heat-treated in the first process are brought into contact with an acid. This allows for the dissolution of metals contained in the CNTs. It is preferable to use a strong acid to dissolve the metals contained in the CNTs. As a strong acid, from the viewpoint of acidity, strong acids with an acid dissociation constant (pKa) of 3 or less in an aqueous medium are more preferable. In the first process, heat treatment is performed under an inert atmosphere, and the surface oxygen content of the CNTs is suppressed, but it is further preferable to use an acid with relatively low oxidizing power. As a low oxidizing power acid, low oxidizing power acids with a standard electrode potential (E°) of 0.80V vs. SHE or less in an aqueous solution are more preferable, low oxidizing power acids with 0.50V vs. SHE or less are even more preferable, and low oxidizing power acids with 0.20V vs. SHE or less are further preferable. Since low oxidizing power acids have a low ability to oxidize the surface of the CNTs, the surface oxygen content of the CNTs can be further suppressed when treated with low oxidizing power acids. In the specification, the standard electrode potential (E°) represents the potential against a standard hydrogen electrode (SHE) at 25°C.

From such perspective, acids possessing strong acidity and low oxidizing power, such as a hydrochloric acid (acid dissociation constant pKa=-3.7, E°=0 V vs. SHE), a hydrobromic acid (pKa=-4.1, E°=0 V vs. SHE), and a dilute sulfuric acid (pKa=2.0, E°=0.16 V vs. SHE) can be preferably used (all pKa and E° values are in an aqueous medium). Industrially, a hydrochloric acid is preferred. Additionally, a hydrochloric acid tends to have a high ability to remove metals contained in CNTs.

On the other hand, acids that are strong acids but possess high oxidizing power include a nitric acid (pKa=-1.3, E°=0.84 V vs. SHE), a hot concentrated sulfuric acid (fuming sulfuric acid), a perchloric acid (pKa=-10, E°=1.20 V vs. SHE), a chloric acid (pKa=-1.0, E°=1.18 V vs. SHE), a chlorous acid (pKa=-2.0, E°=1.67 V vs. SHE), etc. The acids oxidize the CNT surface and increase the acidic groups introduced on the CNT surface, resulting in a tendency for the CNTs treated with a nitric acid and the like to have a high surface oxygen concentration. From the viewpoint of suppressing the surface oxygen content of the CNTs, it is preferable to use the aforementioned acids possessing strong acidity and low oxidizing power. In other embodiments, in the first process, it is preferable to use an acid with a standard electrode potential (E°) versus SHE lower than a standard electrode potential (E°) versus SHE of a nitric acid. In yet other embodiments, in the first process, it is preferable to use an acid with a standard electrode potential (E°) versus SHE that is the same as or lower than a standard electrode potential (E°) versus SHE of a dilute sulfuric acid.

Preferably, by contacting the CNTs heat-treated under an inert atmosphere in the first process with a low oxidizing acid in the second process, oxidation of the surface of the obtained CNTs is suppressed, and acidic groups on the surface are reduced, thereby enabling further suppression of the surface oxygen content of the obtained CNTs. In this way, by suppressing the amount of oxygen, which is one of the factors that increase the resistance of CNTs, highly conductive CNTs can be obtained.

In the second process, as a method for contacting the heat-treated CNTs with an acid, either a gaseous acid or a liquid acid may be used, but a liquid acid is preferable from the viewpoint of metal solubility. For example, there is a method for contacting an aqueous solution of an acid with CNTs. The acid treatment conditions can be appropriately determined depending on the type of the acid, the type of CNTs, and the type and amount of metals contained in the CNTs. The acid treatment may be performed with heating. On the other hand, the acid treatment temperature is preferably 80°C or lower, and more preferably 50°C or lower. When the acid treatment temperature is 80°C or lower, a higher metal dissolution capability can be obtained. In the case of using a hydrochloric acid, since a hydrochloric acid vapor is corrosive, from the viewpoints of safety, equipment contamination, and environmental pollution, etc., the acid treatment temperature is more preferably 50°C or lower, and may be 10°C to 40°C, or may be around room temperature (25°C). The acid treatment time can be appropriately set according to the acid treatment method, acid treatment scale, acid treatment temperature, etc., but for example, the acid treatment time may be 1 to 3 hours.

At room temperature, by heat treating CNTs to expose metals and dissolving the metals with a strongly acidic and low oxidizing acid, the metals contained in the CNTs may be reduced while suppressing the oxidation of the CNT surface and suppressing the increase in surface oxygen content of the CNTs.

From the viewpoint of further reducing the metals contained in the CNTs, the first process and the second process may each be performed twice or more. In addition, within a range where the crystallinity and surface oxidation degree of the CNTs subjected to the first process can be maintained, other treatment processes may be applied to the CNTs between the first process and the second process.

By means of the first process and the second process, the combustion start temperature of the CNTs becomes higher, and as a result, CNTs capable of forming an electrode film having good conductivity can be obtained, and a secondary cell containing the CNTs can exhibit good performance.

### <Dry grinding of carbon nanotubes (CNTs)>

The CNTs of the embodiment may also be CNTs that have undergone dry grinding to break down particles and improve dispersibility. Dry grinding refers to a process of grinding CNTs without the intervention of liquid substances. Dry grinding may include media grinding, grinding without media, or a combination of two or more dry grinding methods. For example, in media grinding, grinding machines containing grinding media such as beads or steel balls are used, where particles are ground by utilizing the grinding force and the destructive force generated by collisions between the grinding media. For dry grinding equipment, known methods such as dry attritors, ball mills, vibration mills, and bead mills can be used, and the grinding time can be set arbitrarily depending on the equipment or the state of particle grinding.

### [Carbon nanotube (CNT) dispersion]

The CNT dispersion according to the embodiment includes the aforementioned CNTs, a dispersant, and a dispersion medium. The CNT dispersion in the specification does not contain an electrode active material. Furthermore, according to the embodiment, a method for manufacturing a CNT dispersion containing the aforementioned CNTs, a dispersant, and a dispersion medium can be provided.

### <Dispersant>

The dispersant is not particularly limited as long as the dispersant can stably disperse CNTs, and for example, surfactants and resin-type dispersants can be used. Surfactants are mainly classified into anionic, cationic, nonionic, and amphoteric types. Depending on the characteristics required for dispersing the CNTs, an appropriate type of dispersant can be used in a suitable amount.

As resin-type dispersants, for example, cellulose derivatives (such as cellulose acetate, cellulose acetate butyrate, cellulose butyrate, cyanoethyl cellulose, ethyl hydroxyethyl cellulose, nitrocellulose, methyl cellulose, ethyl cellulose, hydroxyethyl cellulose, hydroxypropyl cellulose, hydroxypropyl methyl cellulose, carboxymethyl cellulose, etc.), polyvinyl alcohol, polyvinyl butyral, polyvinyl pyrrolidone, hydrogenated nitrile butadiene rubber, polyacrylonitrile-based polymers, and the like can be mentioned. Particularly, methyl cellulose, ethyl cellulose, carboxymethyl cellulose, polyvinyl alcohol, polyvinyl butyral, polyvinyl pyrrolidone, hydrogenated nitrile butadiene rubber, and polyacrylonitrile-based polymers are preferred. The molecular weight of the resin-type dispersant is preferably 10,000 to 300,000, and more preferably 10,000 to 150,000.

In addition to the dispersant, it is preferable to add an amine compound or an inorganic base. As the amine compound, a primary amine (1st class amine), a secondary amine (2nd class amine), and a tertiary amine (3rd class amine) can be used, and ammonia and quaternary ammonium compounds are not included. Besides monoamines, amine compounds having multiple amino groups in a molecule, such as diamines, triamines, and tetramines, can be used as the amine compound. Specifically, examples include aliphatic primary amines such as methylamine, ethylamine, butylamine, octylamine; aliphatic secondary amines such as dimethylamine, diethylamine, dibutylamine; aliphatic tertiary amines such as trimethylamine, triethylamine, dimethyloctylamine; amino acids such as alanine, methionine, proline, serine, asparagine, glutamine, lysine, arginine, histidine, aspartic acid, glutamic acid, cysteine; alkanolamines such as dimethylaminoethanol, monoethanolamine, diethanolamine, methylethanolamine, triethanolamine; and alicyclic nitrogen-containing heterocyclic compounds such as hexamethylenetetramine, morpholine, piperidine, but are not limited thereto. As inorganic bases, for example, alkali metal hydroxides, alkaline earth metal hydroxides, alkali metal carbonates, alkaline earth metal carbonates, alkali metal phosphates, alkaline earth metal phosphates, etc. can be mentioned.

### <Dispersion medium>

The dispersion medium is not particularly limited as long as CNTs can be dispersed therein, but the dispersion medium is preferably composed of one or two or more types selected from water and water-soluble organic solvents.

As water-soluble organic solvents, for example, alcohols, polyhydric alcohols, polyhydric alcohol ethers, amines, amides (N-methyl-2-pyrrolidone (NMP), N-ethyl-2-pyrrolidone (NEP), N,N-dimethylformamide, N,N-dimethylacetamide, N,N-diethylacetamide, N-methylcaprolactam, etc.); heterocyclic compounds, sulfoxides, sulfones, lower ketones, and others such as tetrahydrofuran, urea, acetonitrile, etc. can be mentioned. Among these, water or amide-based organic solvents are more preferable, and among amide-based organic solvents, N-methyl-2-pyrrolidone and N-ethyl-2-pyrrolidone are particularly preferable.

When using merely amide-based organic solvents as the dispersion medium, it is preferable that the water content in the dispersion medium be 500 ppm or less, more preferably 300 ppm or less, and particularly preferably 100 ppm or less.

The CNT dispersion can be manufactured, for example, by performing a process of dispersing CNTs in a dispersion medium. The raw materials to be used may be added at any timing during the dispersion process, either once or divided into multiple times. The dispersion method for performing such process is not particularly limited.

As for the dispersion method, for example, methods using various types of dispersing machines such as a disper (dispersing machine), a homogenizer, a high shear mixer, a kneader, a two-roll mill, a three-roll mill, a ball mill, a lateral sand mill, a longitudinal sand mill, an annular bead mill, a paint conditioner, an attritor, a planetary mixer, or a high-pressure homogenizer can be mentioned. There is no particular restriction on the dispersing machine, but from the viewpoint of preparing the fiber length of CNTs in the CNT dispersion to be within a preferable range, it is preferable to use a high-pressure homogenizer. From the viewpoint of promoting the wetting of CNTs and loosening coarse particles and agglomerates, it is preferable to use a high shear mixer. From the viewpoint of crushing agglomerated and solidified particles, it is preferable to use a media-type dispersing machine such as a bead mill. Furthermore, it is more preferable to disperse by selecting and combining multiple dispersing machines mentioned above, and the order of the dispersing machines can be changed arbitrarily. When using a high-pressure homogenizer, the pressure is not particularly limited, for example, the pressure is preferably 60 to 150 MPa, and more preferably 60 to 120 MPa.

There are various dispersion methods using dispersion devices, such as batch dispersion, pass dispersion, circulation dispersion, etc., and any method can be used, or two or more methods can be combined. Batch dispersion is a method for performing dispersion using merely the main body of the dispersion device without using piping or the like. Batch dispersion is preferable for small-scale production due to simple handling. Pass dispersion is a dispersion method in which the main body of the dispersion device is provided with a tank for supplying the dispersion liquid and a tank for receiving the dispersion liquid through piping, and the dispersion liquid is passed through the main body of the dispersion device. Circulation dispersion is a method for performing dispersion while circulating the dispersion liquid that has passed through the main body of the dispersion device back to the tank supplying the dispersion liquid. In all cases, the longer the processing time, the more the dispersion progresses, so it is sufficient to repeat the pass or circulation until the desired dispersion state is achieved, and the processing volume can be increased by changing the tank size or processing time. Pass dispersion is preferable in that it is easier to uniformize the dispersion state compared to circulation dispersion. Circulation dispersion is preferable in that the operation and manufacturing equipment are simpler compared to pass dispersion. In the dispersion process, the disintegration of agglomerated particles, the unraveling of conductive materials, wetting, stabilization, etc. proceed sequentially or simultaneously, and the final dispersion state differs depending on how the process progresses. Therefore, it is preferable to manage the dispersion state at each dispersion step using various evaluation methods. For example, the dispersion state can be managed using the method described in the examples.

The solid content of the CNT dispersion is preferably 0.1 mass% or more, more preferably 0.5 mass% or more, further preferably 1 mass% or more, and particularly preferably 2 mass% or more, with respect to 100 mass% of the CNT dispersion. Also, the solid content of the CNT dispersion is preferably 30 mass% or less, more preferably 25 mass% or less, further preferably 10 mass% or less, and particularly preferably 8 mass% or less, with respect to 100 mass% of the CNT dispersion.

The content of the dispersant in the CNT dispersion is preferably 3 mass% or more, more preferably 5 mass% or more, and even more preferably 10 mass% or more with respect to 100 mass% of CNT, from the viewpoints of CNT feedability, dispersibility, and dispersion stability. Also, the content of the dispersant in the CNT dispersion is preferably 300 mass% or less, more preferably 100 mass% or less, and even more preferably 50 mass% or less with respect to 100 mass% of CNT, from the viewpoint of conductivity.

The CNT dispersion can contain metals in the form of particulate metal foreign matter and dissolved metal ions. Metal foreign matter is a metal that exists in a particulate form in the CNT dispersion, specifically including the metals contained in the aforementioned CNTs. CNTs, dispersants, and other materials may contain metal foreign matter originating from the respective manufacturing processes thereof, and metal foreign matter may also be introduced during the manufacturing process of the CNT dispersion. The presence of metal foreign matter inside the cell can make the cell more susceptible to short-circuiting, therefore removing metal foreign matter is extremely important from a safety perspective.

It is preferable to include a process for removing metal foreign matter and other contaminants (metal foreign matter removal process) at any timing during the process of manufacturing the CNT dispersion. From the viewpoint of efficiency, it is preferable to perform the metal foreign matter removal process in the middle of the dispersion process of the CNT dispersion and/or at the end of the dispersion process. The metal foreign matter removal process may be performed multiple times.

The method for removing metal foreign matter from the CNT dispersion in the metal foreign matter removal process is not particularly limited, and examples include a method of removing by filtration using a filter, a method of removing by vibration sieving, a method of removing by centrifugation, and a method of removing by magnetic force. Among the methods, since metal foreign matter such as iron and chromium possesses magnetism, a method of removing by magnetic force is preferable, and a method combining a process of removing by magnetic force and a process of removing by filtration using a filter is more preferable.

As for the method of removing by magnetic force, there is no particular limitation as long as it is a method capable of removing metal foreign matter. However, from the viewpoint of productivity and removal efficiency, the method of removing by passing the CNT dispersion through a magnetic filter disposed in the manufacturing line of the CNT dispersion is preferable.

The process of removing metal foreign matter from the CNT dispersion by means of a magnetic filter is preferably carried out by passing the CNT dispersion through a magnetic filter that forms a magnetic field with a magnetic flux density of 1,000 gauss or more. Since a low magnetic flux density decreases the removal efficiency of metal foreign matter, the magnetic flux density is preferably 5,000 gauss or more, and considering the removal of weakly magnetic stainless steel, the magnetic flux density is more preferably 10,000 gauss or more, and most preferably 12,000 gauss or more.

Coarse metal particles may pass through the magnetic filter depending on the filtration flow rate. Therefore, when disposing a magnetic filter in the manufacturing line, it is preferable to include a process to remove coarse foreign matter or metal particles using filters such as cartridge filters upstream of the magnetic filter. Moreover, while the magnetic filter is effective even with a single filtration, the magnetic filter is more preferable to be a circulation type. By making the magnetic filter a circulation type, the removal efficiency of metal particles can be improved.

In the manufacturing line of the CNT dispersion, when disposing a magnetic filter, the location of the magnetic filter is not particularly restricted, but preferably, the magnetic filter is disposed immediately before filling the carbon nanotube dispersion into a container. In cases where a filtration process using a filtration filter exists before filling into the container, it is preferable to dispose the magnetic filter before the filtration filter. By disposing the magnetic filter in this manner, even if a metal detaches from the magnetic filter, contamination of the product can be prevented.

The metal content in the CNT dispersion is, after drying the CNT dispersion and removing the solvent, can be calculated by analyzing using ICP. The metal content detected by ICP analysis includes metal foreign matter existing in a particulate form and dissolved metal ions. In other words, the metal content of the CNT dispersion that has undergone the metal foreign matter removal process includes metal foreign matter that could not be completely removed and dissolved metal ions.

The content of iron and chromium metals contained in the CNT dispersion is preferably 100 ppm or less, more preferably 50 ppm or less, and even more preferably 10 ppm or less, with respect to 100 mass% of the CNT dispersion. By setting the metal content within the above range, side reactions within the electrode film can be suppressed, and a secondary cell with superior conductivity can be obtained.

Since the CNT dispersion of the embodiment contains CNTs with reduced metal content, the metal content in the CNT dispersion can also be reduced.

The CNT dispersion may also include one or two or more types of carbon materials such as carbon black and graphite as conductive materials. Among the conductive materials, carbon black is preferable from the viewpoint of adsorption performance of the dispersant.

### [Binder composition]

The binder composition according to the embodiment includes the aforementioned CNT dispersion and a binder. The binder composition in the specification does not include an electrode active material. Furthermore, according to the embodiment, a method for manufacturing a binder composition containing the aforementioned CNTs, a dispersant, a dispersion medium, and a binder can be provided.

### [Binder]

A binder is a resin that binds various substances together in an electrode film.

As for the binder, publicly known binders for cells can be used. Examples include cellulose resins such as carboxymethyl cellulose; rubber materials such as styrene-butadiene rubber and fluorine rubber. Also, modified products, mixtures, and copolymers of the resins may be used. Particularly, from the viewpoint of resistance, it is preferable to use polymeric compounds containing fluorine atoms in the molecule, such as polyvinylidene fluoride, polyvinyl fluoride, and tetrafluoroethylene.

The weight average molecular weight of the binder is preferably 10,000 or more, more preferably 100,000 or more, and particularly preferably 200,000 or more. Also, the weight average molecular weight of the binder is preferably 2,000,000 or less, more preferably 1,500,000 or less, and particularly preferably 1,000,000 or less. When the weight average molecular weight is 10,000 or more, the decrease in resistance and adhesion of the binder can be suppressed. When the weight average molecular weight is 2,000,000 or less, while improving the resistance and adhesion of the binder, the decrease in workability due to the increased viscosity of the binder itself can be suppressed, and the significant agglomeration of dispersed particles can be prevented.

The binder composition is preferably manufactured by mixing and homogenizing the CNT dispersion and the binder, and the binder may be used after being pre-dissolved. Additionally, the binder may be added at any timing during the process of manufacturing the CNT dispersion. The mixing method can be any of various conventionally known methods. The binder composition can be prepared using the dispersion device described for the aforementioned CNT dispersion. The binder in the binder composition may be a single type or a combination of two or more types. Furthermore, the manufacturing process of the binder composition may include the metal foreign matter removal process mentioned above.

### [Electrode composition]

The electrode composition according to the embodiment includes the aforementioned CNT dispersion and an electrode active material. The electrode composition can be mixed with a binder to manufacture composite slurry. Furthermore, according to the embodiment, a method for manufacturing a binder composition containing the aforementioned CNTs, a dispersant, a dispersion medium, and an electrode active material can be provided, and a method for manufacturing a binder composition containing the aforementioned CNTs, a dispersant, a dispersion medium, an electrode active material, and composite slurry can be provided.

### [Electrode active material]

An electrode active material is a material that serves as the basis for cell reactions. The active material can be divided into a positive electrode active material and a negative electrode active material based on electromotive force.

As for the positive electrode active material, there is no particular limitation, but metal compounds such as metal oxides and metal sulfides capable of doping or intercalating lithium ions, and conductive polymers can be used. For example, inorganic compounds such as oxides of transition metals like Fe, Co, Ni, Mn, composite oxides with lithium, and transition metal sulfides can be mentioned. Specifically, transition metal oxide powders such as MnO, V₂O₅, V₆O₁₃, TiO₂; composite oxide powders of lithium and transition metals with layered structures such as lithium nickelate, lithium cobaltate, lithium manganate, and lithium manganate with a spinel structure; and lithium iron phosphate-based materials which are phosphate compounds with an olivine structure can be mentioned. The positive electrode active materials can be used alone or in combination of two or more. Also, a mixture of the above-mentioned inorganic compounds and organic compounds may be used.

As for the negative electrode active material, there is no particular limitation, but materials capable of doping or intercalating lithium ions can be used. For example, metal Li, alloys thereof such as tin alloys, silicon alloys, lead alloys, etc. of the alloy system; LiₓFe₂O₃, LiₓFe₃O₄, LiₓWO₂ (where x is a number satisfying 0<x<1), lithium titanate, lithium vanadate, lithium silicate, etc. of the metal oxide system; amorphous carbonaceous materials such as soft carbon and hard carbon, or highly graphitized carbon materials such as artificial graphite, or natural graphite, etc. of carbonaceous powders can be mentioned. The negative electrode active materials can be used alone or in combination of two or more. Particularly, combining highly graphitized carbon materials with lithium silicate is preferable from the viewpoint of capacity and service life.

The BET specific surface area of the electrode active material is preferably 0.1 to 10 m²/g, more preferably 0.2 to 5 m²/g, and even more preferably 0.3 to 3 m²/g.

The average particle size of the electrode active material is preferably 0.05 to 100 µm, and more preferably 0.1 to 50 µm. The average particle size of the electrode active material referred to in the specification is the average value of the particle sizes measured by an electron microscopy of the electrode active material.

The electrode composition is preferably manufactured by mixing and homogenizing the CNT dispersion and the electrode active material. The binder may be dissolved in the CNT dispersion in advance before use. Additionally, the electrode active material may be added at any timing during the process of manufacturing the CNT dispersion. The dispersion device used to perform the dispersion treatment of the electrode active material is not particularly limited, and the dispersion devices exemplified in the manufacturing of the CNT dispersion can be used.

In the case of composite slurry containing an electrode composition, the content of the electrode active material included in the composite slurry is preferably 20 mass% or more, and more preferably 40 mass% or more, with respect to 100 mass% of the composite slurry. Also, the content of the electrode active material included in the composite slurry is preferably 99 mass% or less, and more preferably 97 mass% or less, with respect to 100 mass% of the composite slurry. A content within the above range is preferable from the viewpoint of coatability or productivity and from the viewpoint of uniformity of the electrode film.

The content of the CNTs included in the composite slurry is preferably 0.01 mass% or more, and more preferably 0.05 mass% or more, with respect to 100 mass% of the electrode active material. Also, the content of the CNTs included in the composite slurry is preferably 10 mass% or less, more preferably 5 mass% or less, and even more preferably 3 mass% or less, with respect to 100 mass% of the electrode active material.

The content of the binder included in the composite slurry is preferably 0.3 mass% or more, and more preferably 0.7 mass% or more, with respect to 100 mass% of the electrode active material. Also, the content of the binder included in the composite slurry is preferably 20 mass% or less, more preferably 10 mass% or less, and even more preferably 5 mass% or less, with respect to 100 mass% of the electrode active material.

The solid content of the composite slurry is preferably 30 mass% or more, and more preferably 40 mass% or more, with respect to 100 mass% of the composite slurry. Also, the solid content of the composite slurry is preferably 90 mass% or less, and more preferably 85 mass% or less, with respect to 100 mass% of the composite slurry.

The moisture content included in the composite slurry is preferably 500 ppm or less, more preferably 300 ppm or less, and particularly preferably 100 ppm or less.

### (Electrode film)

The electrode film according to the embodiment is an electrode film obtained using (i) a carbon nanotube dispersion containing carbon nanotubes, a dispersant, and a dispersion medium, (ii) a binder composition containing the carbon nanotube dispersion and a binder, or (iii) an electrode composition containing the carbon nanotube dispersion and an electrode active material. As the carbon nanotubes, the carbon nanotubes of the embodiment described above are used. Additionally, the electrode film may be an electrode film obtained using (iv) composite slurry. The (iv) composite slurry can be obtained using the aforementioned (i) carbon nanotube dispersion, (ii) binder composition, or (iii) electrode composition.

For example, the electrode film is a coating film formed by applying and drying the aforementioned composite slurry on a current collector. The material and shape of the current collector used for the electrode film are not particularly limited, and can be appropriately selected to suit various secondary cells. For instance, materials for the current collector include metals and alloys such as aluminum, copper, nickel, titanium, or stainless steel.

There is no particular restriction on the method for coating the composite slurry on the current collector, and known methods can be used.

Also, after coating and drying, rolling treatment may be performed using a flat press or calender roll. The thickness of the electrode film is generally 1 µm or more and 500 µm or less, and preferably 10 µm or more and 300 µm or less.

### (Secondary cell)

The secondary cell according to the embodiment includes the aforementioned electrode film. The electrode film can be used as an electrode for the secondary cell, and it is particularly preferable to use the electrode film as an electrode for a non-aqueous electrolyte secondary cell that uses an organic electrolyte. A non-aqueous electrolyte secondary cell is a cell that includes a positive electrode, a negative electrode, and an electrolyte containing an organic electrolyte. The electrode film can be used for either the positive electrode, the negative electrode, or both.

In an embodiment, for example, an electrode film obtained by coating and drying an electrode composition containing a positive electrode active material on a current collector can be used as a positive electrode.

Also, in an embodiment, for example, an electrode film obtained by coating and drying an electrode composition containing a negative electrode active material on a current collector can be used as a negative electrode.

Also, in an embodiment, an electrode film obtained by coating and drying a CNT dispersion or a binder composition on a current collector can be used as a current collector with an undercoat layer.

In particular, from the viewpoint of safety, it is preferable to use the electrode film as a positive electrode.

As for the electrolyte, various conventionally known substances that allow ion movement can be used. For example, electrolytes containing lithium salts such as LiBF₄, LiClO₄, LiPF₆, LiAsF₆, LiSbF₆, LiCF₃SO₃, Li(CF₃SO₂)₂N, LiC₄F₉SO₃, Li(CF₃SO₂)₃C, LiI, LiBr, LiCl, LiAlCl, LiHF₂, LiSCN, or LiBPh₄ (where Ph is a phenyl group) can be mentioned, but are not limited thereto, and electrolytes containing sodium salts can also be used. It is preferable to use the electrolyte dissolved in a non-aqueous solvent as an electrolyte solution. All-solid-state electrolytes or polymer electrolytes may also be used.

As for non-aqueous solvents, there is no particular limitation, and various suitable solvents for secondary cells can be used. For example, carbonates such as ethylene carbonate, propylene carbonate, butylene carbonate, dimethyl carbonate, ethyl methyl carbonate, and diethyl carbonate; lactones; glymes; esters; sulfoxides; and nitriles can be mentioned. The solvents may be used alone or in a mixture of two or more types.

It is preferable for the secondary cell to include a separator. As examples of the separator, polyethylene nonwoven fabric, polypropylene nonwoven fabric, polyamide nonwoven fabric, and the materials subjected to hydrophilic treatment can be mentioned, but are not particularly limited thereto.

The structure of the secondary cell is not particularly limited, but the structure is typically composed of a positive electrode and a negative electrode, and a separator provided as necessary. The structure can be formed into various shapes according to the purpose of use, such as paper type, cylindrical type, button type, laminated type, etc.

In the specification, a numerical range indicated using "to" denotes a range that includes the values stated before and after "to" as the minimum and maximum values, respectively. In the numerical ranges described in stages in the specification, the upper limit or lower limit of a numerical range at one stage can be arbitrarily combined with the upper limit or lower limit of a numerical range at another stage.

### Example

The following examples are provided to further specifically describe the present invention. The present invention is not limited to the following examples as long as the present invention does not exceed the spirit thereof.

### <Method for measuring physical properties>

Physical properties of carbon nanotubes (CNTs) were measured by the following methods. Unless otherwise specified, the physical properties of the CNTs were measured after the CNTs were purified.

### <Total metal content of CNTs>

A microwave sample pretreatment apparatus (ETHOS, manufactured by Milestone General Co., Ltd.) was used to acid-decompose the CNTs and extract the metals contained in the CNTs. The analysis of the extracted metals was performed using a multi-type ICP emission spectroscopy analyzer (720-ES, manufactured by Agilent) to calculate the content of the metals contained in the CNTs. From the calculated metal content, the total content of cobalt, iron, copper, zinc, nickel, chromium, manganese and molybdenum was determined.

The total content of cobalt, iron, copper, zinc, nickel, chromium, manganese and molybdenum in the CNTs is expressed as the mass ratio (ppm) of the total mass of extracted iron, copper, zinc, nickel, chromium, manganese and molybdenum to the mass of the CNTs before metal extraction.

### <G/D ratio of CNTs>

The CNTs were disposed in a Raman microscope (XploRA, manufactured by HORIBA, Ltd.), and measurements were performed using a laser wavelength of 532 nm. The measurement conditions were set as follows: acquisition time of 60 seconds, accumulation count of 2 times, attenuation filter at 10%, objective lens magnification of 20 times, confocal hole of 500, slit width of 100 µm, and measurement wavelength range of 100 to 3000 cm⁻¹. The CNTs for measurement were dispensed onto a slide glass and flattened using a spatula. Among the obtained peaks in the spectrum, the maximum peak intensity within the range of 1560 to 1600 cm⁻¹ was designated as G, and the maximum peak intensity within the range of 1310 to 1350 cm⁻¹ was designated as D. The ratio of G/D was calculated and defined as the G/D ratio of the CNTs.

### <Temperature of the exothermic peak of CNTs>

Using a thermogravimetric differential thermal analysis apparatus (Tg-DTA 8122 Thermo plus EVO2 manufactured by Rigaku Corporation), a sample mass of 1.0 mg was added to an alumina pan container, and heated from 25°C to 1000°C at a heating rate of 10°C/min under an air atmosphere. For the obtained DTA curve, the temperature at the peak apex in the temperature range from 200°C to 1000°C was designated as the temperature of the exothermic peak.

### <Surface oxygen content of CNTs>

The surface oxygen content of the CNTs was measured using an X-ray photoelectron spectroscopy (XPS) apparatus (K-Alpha, manufactured by ThermoFisher Scientific). After pelletizing the CNTs, the sample was fixed to the sample stage using double-sided tape and the measurement was performed. The XPS detected carbon atoms and oxygen atoms on the surface of the CNT sample. Here, the ratio (atm%) of oxygen atoms to carbon atoms was calculated as the surface oxygen content.

### <Volume resistivity of CNTs>

A powder resistivity measuring device (manufactured by Nitto Seiko Analytic Co., Ltd.: Lorester GP Powder Resistivity Measurement System MCP-PD-51) was used, with a sample mass of 1.2 g, and a powder probe unit (four-probe ring electrode, electrode spacing of 5.0 mm, electrode radius of 1.0 mm, sample radius of 12.5 mm) was employed to measure the volume resistivity [Ω • cm] of the CNT powder under various pressures, with an applied voltage limiter set to 90 V. The volume resistivity of the CNTs at a density of 1 g/cm³ was evaluated.

### (Measurement conditions)

Excitation source: Monochromated AlKα 15kV×10mA
Analysis size: 400 µm (shape is elliptical)
Photoelectron take-off angle: 0° (perpendicular to the sample surface)
Intake region
   - Survey scan: 0 to 1,350 eV
   - Narrow scan: C1s, O1s, N1s, Cl2p
   - Pass Energy
Survey scan: 200eV
Narrow scan: 50eV

### <Volume resistivity of electrode>

The volume resistivity of the electrode was evaluated by preparing a positive electrode composite material composition using the prepared CNT dispersion and a positive electrode active material, applying the positive electrode composite material composition onto a PET (polyethylene terephthalate) foil, drying the positive electrode composite material composition on the PET foil and creating a composite coating film. After that, the surface resistivity of the composite layer was measured and converted to volume resistivity. The CNT dispersion used was the one adjusted in the examples and comparative examples described later.

### (Preparation of positive electrode composite material composition)

A plastic container with a capacity of 150 cm³ was filled with a CNT dispersion and PVdF (polyvinylidene fluoride, solef 5130, manufactured by solvay, 100% non-volatile content) which had been previously dissolved in NMP (N-methyl-2-pyrrolidone) to a concentration of 8%, and NMC (S800, LiNi_{0.8}Mn_{0.1}Co_{0.1}O₂, manufactured by Jinhe) as the positive electrode active material. The mixture was then stirred for 30 seconds at 2,000 rpm using a planetary centrifugal mixer (Shinky Awatori Rentaro, ARE-310). Subsequently, after breaking up any clumps with a spatula, the mixture was stirred again for 300 seconds at 2,000 rpm using the planetary centrifugal mixer (Shinky Awatori Rentaro, ARE-310) to obtain a positive electrode composite material composition. The non-volatile content of the positive electrode composite material composition was set to 78%. The ratio of non-volatile content of NMC:CNT:PVdF in the non-volatile portion of the positive electrode composite material composition was 98:0.5:1.5.

### (Preparation of composite coating film)

The above-mentioned positive electrode composite material composition was applied onto a PET film having a thickness of 100 µm using an applicator, such that the coating weight per unit area of the electrode became 20 mg/cm². Subsequently, the positive electrode composite material composition on the PET film was dried in an electric oven at 120°C ± 5°C for 30 minutes to prepare a composite coated film.

### (Evaluation of volume resistivity of electrode)

The surface resistivity (Ω/□) of the composite layer of the prepared composite coating film was measured using a Lorester GP, MCP-T610 manufactured by Mitsubishi Chemical Analytech. After measurement, the thickness of the composite layer was multiplied to obtain the volume resistivity (Ω • cm) of the electrode. The thickness of the composite layer was determined by measuring three points in the electrode using a film thickness meter (DIGIMICRO MH-15M manufactured by NIKON), taking the average value, and subtracting the thickness of the PET foil from the average value.

In the following examples and comparative examples described later, the following CNTs were used.
- 10B: Multi-walled carbon nanotubes (manufactured by JEIO Co., Ltd., JENOTUBE10B)
- BT1001M: Multi-walled carbon nanotubes (manufactured by LG Chem, BT1001M)
- 6A: Multi-walled carbon nanotubes (manufactured by JEIO Co., Ltd., JENOTUBE6A)

### (Example 1)

Using an electronic balance (manufactured by Sartorius, model MSA225S100DI), 50g of 10B was weighed into a crucible and placed in a multipurpose high-temperature furnace (manufactured by Fuji Denpa Kogyo Co., Ltd., model High Multi 5000). Under a nitrogen atmosphere (N₂) with a nitrogen flow rate of 1.5 L/min, the temperature was raised to 1200°C at a heating rate of 20°C/min, and then calcined at 1200°C for 3 hours. After that, the 50g of 10B was naturally cooled until the temperature became 50°C or lower, thereby obtaining calcined 10B.

10 g of the calcined 10B was weighed into a 1 L glass container, and 500 g of 10% hydrochloric acid (manufactured by FUJIFILM Wako Pure Chemical Corporation) was added, followed by thorough stirring using a stirrer. Thereafter, the mixture was sufficiently diluted with ion-exchanged water and filtered under reduced pressure using a membrane filter. After repeated dilution and filtration, the CNTs were transferred to a polytetrafluoroethylene (PTFE) tray. The mixture was dried at 140°C using an oven to obtain treated 10B.

The preparation of the CNT dispersion was carried out as follows: In a stainless steel container, an NMP solution containing 7% concentration of hydrogenated nitrile butadiene rubber (Zetpole2000L, manufactured by Zeon Corporation) and NMP were added so that the polymer was 0.6 parts by mass and the total amount of NMP was 96.4 parts by mass. Then, 3.0 parts by mass of the treated 10B was taken and added while stirring with a disper. A high shear mixer (L5M-A, manufactured by SILVERSON) equipped with a square hole high shear screen was used to perform batch dispersion at a speed of 8,600 rpm until the whole mixture became uniform and the dispersion particle size measured by a grind gauge became 250 µm or less. At this time, the dispersion particle size confirmed by the grind gauge was 180 µm. Subsequently, the liquid to be dispersed was transferred from the stainless steel container to a bead mill (Star Mill LMZ, manufactured by Ashizawa Finetech) filled with zirconia beads with a diameter of 1.00 mm, and circulation dispersion processing was performed to obtain a CNT dispersion.

### (Example 2)

Except for changing the type of CNTs, calcination temperature, and calcination time as described in Table 1, the treatment was performed according to the method described in Example 1, and treated CNTs were obtained.

The preparation of the CNT dispersion was carried out using the method described in Example 1, and a CNT dispersion was obtained.

### (Example 3, Example 4)

Except for changing the type of CNTs, calcination temperature, and calcination time as described in Table 1, the treatment was performed according to the method described in Example 1, and treated CNTs were obtained.

The preparation of the CNT dispersion was carried out as follows: In a stainless steel container, an NMP solution containing 7% concentration of hydrogenated nitrile butadiene rubber (Zetpole2000L, manufactured by Zeon Corporation) and NMP were added so that the polymer was 0.4 parts by mass and the total amount of NMP was 97.6 parts by mass. Then, 2.0 parts by mass of the treated 10B was taken and added while stirring with a disper. A high shear mixer (L5M-A, manufactured by SILVERSON) equipped with a square hole high shear screen was used to perform batch dispersion at a speed of 8,600 rpm until the whole mixture became uniform and the dispersion particle size measured by a grind gauge became 250 µm or less. At this time, the dispersion particle size confirmed by the grind gauge was 180 µm. Subsequently, the liquid to be dispersed was transferred from the stainless steel container to a bead mill (Star Mill LMZ, manufactured by Ashizawa Finetech) filled with zirconia beads with a diameter of 1.00 mm, and circulation dispersion processing was performed to obtain a CNT dispersion.

### (Example 5)

Except for changing the type of CNTs, calcination temperature, and calcination time as described in Table 1, the treatment was performed according to the method described in Example 1, and treated CNTs were obtained.

The preparation of the CNT dispersion was carried out as follows: In a stainless steel container, an NMP solution containing 7% concentration of hydrogenated nitrile butadiene rubber (Zetpole2000L, manufactured by Zeon Corporation) and NMP were added so that the polymer was 0.4 parts by mass and the total amount of NMP was 97.6 parts by mass. Then, 2.0 parts by mass of the treated 10B was taken and added while stirring with a disper. A high shear mixer (L5M-A, manufactured by SILVERSON) equipped with a square hole high shear screen was used to perform batch dispersion at a speed of 8,600 rpm until the whole mixture became uniform and the dispersion particle size measured by a grind gauge became 250 µm or less. At this time, the dispersion particle size confirmed by the grind gauge was 180 µm. Subsequently, the liquid to be dispersed was transferred from the stainless steel container to a bead mill (Star Mill LMZ, manufactured by Ashizawa Finetech) filled with zirconia beads with a diameter of 1.00 mm, and circulation dispersion processing was performed. After confirming that the viscosity of the contents in the above-mentioned stainless steel container had decreased and had sufficient fluidity, the liquid to be dispersed was then supplied to a high-pressure homogenizer (Starburst Lab HJP-17007, manufactured by Sugino Machine) and circulation dispersion processing was performed to obtain a CNT dispersion. The dispersion processing in the high-pressure homogenizer was carried out using a single nozzle chamber with a nozzle diameter of 0.25 mm at a pressure of 100 MPa.

### (Example 6)

The treatment was carried out using the method described in Example 1, and treated CNTs were obtained. Subsequently, 10 parts of the treated CNTs and 200 parts of zirconia beads with a diameter of 2 mm were charged as grinding media, and dry grinding was performed for 15 minutes using a paint conditioner (manufactured by Red Devil) to obtain dry-ground CNTs.

The preparation of the CNT dispersion was carried out using the method described in Example 1, and a CNT dispersion was obtained.

### (Comparative Example 1: Untreated)

The sample of Comparative Example 1 was prepared without applying any treatment to 10B.

The preparation of the CNT dispersion was carried out as follows: In a stainless steel container, an NMP solution containing 7% concentration of hydrogenated nitrile butadiene rubber (Zetpole2000L, manufactured by Zeon Corporation) and NMP were added so that the polymer was 0.6 parts by mass and the total amount of NMP was 96.4 parts by mass. Then, 3.0 parts by mass of untreated 10B were taken and added while stirring with a disper. A high shear mixer (L5M-A, manufactured by SILVERSON) equipped with a square hole high shear screen was used to perform batch dispersion at a speed of 8,600 rpm until the whole mixture became uniform and the dispersion particle size measured by a grind gauge became 250 µm or less. At this time, the dispersion particle size confirmed by the grind gauge was 180 µm. Subsequently, the liquid to be dispersed was supplied from the stainless steel container to a high-pressure homogenizer (Starburst Lab HJP-17007, manufactured by Sugino Machine) and circulation dispersion processing was performed to obtain a CNT dispersion. The dispersion processing in the high-pressure homogenizer was carried out using a single nozzle chamber with a nozzle diameter of 0.25 mm at a pressure of 100 MPa.

### (Comparative Example 2: Nitric acid treatment)

Using an electronic balance (manufactured by Sartorius, model MSA225S100DI), 10 g of 10B was weighed into an alumina crucible SSA-HB4 (manufactured by Nikkato Corporation) and placed in a muffle furnace (manufactured by Yamato Scientific Co., Ltd., model FO510). Under an air atmosphere, the temperature was raised to 330°C at a heating rate of 60°C/min, and the sample was calcined at 330°C for 18 hours to obtain oxidized 10B.

10 g of the oxidized 10B was weighed into a 1 L glass container, and 500 g of 10% nitric acid (manufactured by FUJIFILM Wako Pure Chemical Corporation) was added. The mixture was then heated to 90°C in a water bath while being thoroughly stirred using a stirrer. Thereafter, the mixture was sufficiently diluted with ion-exchanged water and filtered under reduced pressure using a membrane filter. After repeated dilution and filtration, the CNTs were transferred to a PTFE tray. The mixture was dried at 140°C using an oven to obtain
nitric acid-treated 10B.

The preparation of the CNT dispersion was carried out using the method described in Comparative Example 1, and a CNT dispersion was obtained.

### (Comparative Example 3: Halogen purification)

10 kg of 6A was weighed into a 120 L heat-resistant container, and the heat-resistant container containing 6A was disposed in a furnace. Subsequently, nitrogen gas was introduced into the furnace, and the air inside the furnace was discharged while maintaining a positive pressure. After the oxygen concentration in the furnace became 0.1% by volume or less, the temperature was raised to 1500°C over a period of 30 hours. While maintaining the furnace temperature at 1500°C, chlorine gas was introduced at a rate of 50 L/min for 100 hours. Thereafter, nitrogen gas was introduced at 50 L/min to maintain a positive pressure while cooling, and halogen-purified 6A was obtained.

The preparation of the CNT dispersion was carried out using the method described in Example 3, and a CNT dispersion was obtained.

Table 1 shows the physical properties of CNTs prepared in each of the examples and comparative examples. In the table, "total metal content" refers to the total content of iron, copper, zinc, nickel, chromium, manganese and molybdenum.

Also, FIG. 1 shows the DTA curves of the CNTs prepared in Example 1 and Comparative Example 1. In the DTA curves, the longitudinal axis indicates the thermoelectric power [µV], and the lateral axis indicates the temperature [°C]. From the figure, the temperature of the exothermic peak in Example 1 was 726°C, and the temperature of the exothermic peak in Comparative Example 1 was 520°C. Although not shown, the temperatures of the exothermic peaks for the other Examples and Comparative Examples were determined in the same manner.

**[Table 1]**

| No. | 1 | 2 | 3 | 4 | 5 | 6 | 7 | 8 | 9 |
|---|---|---|---|---|---|---|---|---|---|
| | Example 1 | Example 2 | Example 3 | Example 4 | Example 5 | Example 6 | Compara tive Example 1 | Compara tive Example 2 | Compara tive Example 3 |
| CNT type | 10B | BT1001 M | 6A | 6A | 6A | 10B | 10B | 10B | 6A |
| Treatment method | under N₂ 1200°C 3 Hr | under N₂ 1000°C 3 Hr | under N₂ 1700°C 1 Hr | under N₂ 2000°C 1 Hr | under N₂ 2000°C 1 Hr | under N₂ 1200°C 3 Hr | untreated | under Air 330°C 90 Hr | halogen purificati on |
| | 10% hydrochl oric acid 25°C 2 Hr | 10% hydrochl oric acid 25°C 2 Hr | 10% hydrochl oric acid 25°C 2 Hr | 10% hydrochl oric acid 25°C 2 Hr | 10% hydrochl oric acid 25°C 2 Hr | 10% hydrochl oric acid 25°C 2 Hr | | 10% nitric acid 90°C | |
| | - | - | - | - | - | with dry grinding | | - | |
| Exothermic peak temperature [°C] | 726 | 665 | 705 | 707 | 707 | 605 | 520 | 590 | 743 |
| G/D ratio [-] | 1.13 | 0.88 | 1.28 | 2.48 | 2.48 | 1.13 | 0.8 | 0.8 | 3.7 |
| Total metal content [ppm] | 644 | 830 | 2100 | 323 | 323 | 644 | 13140 | 1215 | 1.40 |
| Cobalt content [ppm] | 600 | 800 | 700 | 116 | 115 | 600 | 13000 | 1200 | 0 |
| Iron content [ppm] | 0 | 0 | 1300 | 207 | 207 | 0 | 0 | 0 | 5 |
| Surface oxygen content [atm%] | 0.81 | 1.11 | 1.01 | 1.01 | 1.01 | 2.52 | 1.31 | 2.67 | 0.50 |
| Volume resistivity of CNTs [Ω·cm] | 1.6×10⁻² | 1.6×10⁻² | 1.7×10⁻² | 2.2×10⁻² | 2.2×10⁻² | 1.8×10⁻² | 1.6×10⁻² | 1.9×10⁻² | 2.9×10⁻² |
| Volume resistivity of electrode [Ω·cm] | 5 | 4 | 3 | 5 | 5 | 9 | 5 | 12 | 7 |

The CNTs in each of the examples are controlled at least in terms of the G/D ratio, total metal content, and exothermic peak temperature, and it can be seen that the conductivity of the CNT powder is high due to the lower volume resistivity compared to the comparative examples. By using the CNT powder to fabricate an electrode film, it can be understood that a secondary cell with improved conductivity and low volume resistivity of the electrode may be provided.

Also, since the CNTs in each of the examples have a low total metal content, it can be seen that the safety of the electrode film and secondary cell using the CNTs can be improved.

The disclosure includes the following embodiments.

### (Aspect 1)

Carbon nanotubes satisfy the following (1) to (3).
(1) In differential thermal analysis when heated from 200°C to 1000°C at a rate of 10°C/minute, an exothermic peak is observed between 600°C and 800°C inclusive.
(2) In a Raman spectrum, when the maximum peak intensity within a range of 1560 to 1600 cm⁻¹ is defined as G, and the maximum peak intensity within a range of 1310 to 1350 cm⁻¹ is defined as D, the G/D ratio is 0.5 or more and 3.0 or less.
(3) A total content of cobalt, iron, copper, zinc, nickel, chromium, manganese and molybdenum is 5000 ppm or less.

### (Aspect 2)

The carbon nanotubes according to Aspect 1 satisfy the following (4).
(4) A surface oxygen content is 2.5 atm% or less.

### (Aspect 3)

The carbon nanotubes according to Aspect 1 or 2 further satisfy (i) a total content of cobalt and iron of 5000 ppm or less.

### (Aspect 4)

The carbon nanotubes according to Aspect 3 further satisfy (ii) the total content of cobalt and iron of 1000 ppm or less.

### (Aspect 5)

The carbon nanotubes according to any one of Aspects 1 to 4 have a total content of cobalt, iron, copper, zinc, nickel, chromium, manganese and molybdenum of 830 ppm or less.

### (Aspect 6)

The carbon nanotubes according to any one of Aspects 1 to 5 have a G/D ratio of 0.5 or more and 2.5 or less, where G is the maximum peak intensity within the range of 1560 to 1600 cm⁻¹ and D is the maximum peak intensity within the range of 1310 to 1350 cm⁻¹ in the Raman spectrum.

### (Aspect 7)

A carbon nanotube dispersion includes the carbon nanotubes according to any one of Aspects 1 to 6, a dispersant, and a dispersion medium.

### (Aspect 8)

A binder composition includes a carbon nanotube dispersion and a binder, and
the carbon nanotube dispersion includes the carbon nanotubes according to any one of Aspects 1 to 6, a dispersant, and a dispersion medium.

### (Aspect 9)

An electrode composition includes a carbon nanotube dispersion and an electrode active material, and
the carbon nanotube dispersion includes the carbon nanotubes according to any one of Aspects 1 to 6, a dispersant, and a dispersion medium.

### (Aspect 10)

A secondary cell includes an electrode film, and the electrode film
is obtained using a carbon nanotube dispersion that includes the carbon nanotubes according to any one of Aspects 1 to 6, a dispersant, and a dispersion medium,
a binder composition that includes the carbon nanotube dispersion and a binder, or
an electrode composition that includes the carbon nanotube dispersion and an electrode active material.

### (Aspect 11)

A method for purifying carbon nanotubes includes: a first process in which carbon nanotubes are heat treated under an inert atmosphere at a temperature of 1000°C or higher and 2000°C or lower; and a second process in which the carbon nanotubes heat-treated in the first process are contacted with an acid, and
the first process and the second process are each performed once or twice or more.

### (Aspect 12)

In the second process of the method for purifying the carbon nanotubes according to Aspect 11, the acid has a standard electrode potential of 0.8 V vs. SHE or less.

The disclosure of this application relates to the subject matter described in Japanese Patent Application No. 2022-211319 filed on December 28, 2022, and the entire disclosure thereof is incorporated herein by reference.

## Claims

1. Carbon nanotubes, satisfying the following (1) to (3):
(1) in differential thermal analysis when heated from 200°C to 1000°C at a rate of 10°C/minute, an exothermic peak is observed between 600°C and 800°C inclusive;
(2) in a Raman spectrum, when the maximum peak intensity within a range of 1560 to 1600 cm⁻¹ is defined as G, and the maximum peak intensity within a range of 1310 to 1350 cm⁻¹ is defined as D, a G/D ratio is 0.5 or more and 3.0 or less; and
(3) a total content of cobalt, iron, copper, zinc, nickel, chromium, manganese and molybdenum is 5000 ppm or less.

2. The carbon nanotubes according to claim 1, satisfying the following (4):
(4) a surface oxygen content is 2.5 atm% or less.

3. The carbon nanotubes according to claim 1, further satisfying (i) a total content of cobalt and iron of 5000 ppm or less.

4. The carbon nanotubes according to claim 3, further satisfying (ii) the total content of cobalt and iron of 1000 ppm or less.

5. The carbon nanotubes according to claim 1, comprising the total content of cobalt, iron, copper, zinc, nickel, chromium, manganese and molybdenum of 830 ppm or less.

6. The carbon nanotubes according to claim 1, wherein the G/D ratio is 0.5 or more and 2.5 or less, where G is the maximum peak intensity within the range of 1560 to 1600 cm⁻¹ and D is the maximum peak intensity within the range of 1310 to 1350 cm⁻¹ in the Raman spectrum.

7. A carbon nanotube dispersion, comprising the carbon nanotubes according to any one of claims 1 to 6, a dispersant, and a dispersion medium.

8. A binder composition, comprising a carbon nanotube dispersion and a binder, and
the carbon nanotube dispersion comprising the carbon nanotubes according to any one of claims 1 to 6, a dispersant, and a dispersion medium.

9. An electrode composition, comprising a carbon nanotube dispersion and an electrode active material, and
the carbon nanotube dispersion comprising the carbon nanotubes according to any one of claims 1 to 6, a dispersant, and a dispersion medium.

10. A secondary cell, comprising an electrode film, and the electrode film
being obtained using a carbon nanotube dispersion which comprises the carbon nanotubes according to any one of claims 1 to 6, a dispersant, and a dispersion medium,
a binder composition which comprises the carbon nanotube dispersion and a binder, or
an electrode composition which comprises the carbon nanotube dispersion and an electrode active material.

11. A method for purifying carbon nanotubes, comprising:
a first process of heat treating carbon nanotubes under an inert atmosphere at a temperature of 1000°C or higher and 2000°C or lower; and a second process of contacting the carbon nanotubes heat-treated in the first process with an acid, and
the first process and the second process being each performed once or twice or more.

12. The method for purifying the carbon nanotubes according to claim 11, wherein in the second process, the acid has a standard electrode potential of 0.8 V vs. SHE or less.

## Amended claims

### Amended claims under Art. 19.1 PCT

1. (Currently amended) Carbon nanotubes, satisfying the following (1) to (3) and comprising multi-walled carbon nanotubes:
(1) in differential thermal analysis when heated from 200°C to 1000°C at a rate of 10°C/minute, an exothermic peak is observed between 600°C and 800°C inclusive;
(2) in a Raman spectrum, when the maximum peak intensity within a range of 1560 to 1600 cm⁻¹ is defined as G, and the maximum peak intensity within a range of 1310 to 1350 cm⁻¹ is defined as D, a G/D ratio is 0.5 or more and 3.0 or less; and
(3) a total content of cobalt, iron, copper, zinc, nickel, chromium, manganese and molybdenum is 5000 ppm or less.

2. (Original) The carbon nanotubes according to claim 1, satisfying the following (4):
(4) a surface oxygen content is 2.5 atm% or less.

3. (Original) The carbon nanotubes according to claim 1, further satisfying (i) a total content of cobalt and iron of 5000 ppm or less.

4. (Original) The carbon nanotubes according to claim 3, further satisfying (ii) the total content of cobalt and iron of 1000 ppm or less.

5. (Original) The carbon nanotubes according to claim 1, comprising the total content of cobalt, iron, copper, zinc, nickel, chromium, manganese and molybdenum of 830 ppm or less.

6. (Original) The carbon nanotubes according to claim 1, wherein the G/D ratio is 0.5 or more and 2.5 or less, where G is the maximum peak intensity within the range of 1560 to 1600 cm⁻¹ and D is the maximum peak intensity within the range of 1310 to 1350 cm⁻¹ in the Raman spectrum.

7. (Original) A carbon nanotube dispersion, comprising the carbon nanotubes according to any one of claims 1 to 6, a dispersant, and a dispersion medium.

8. (Original) A binder composition, comprising a carbon nanotube dispersion and a binder, and
the carbon nanotube dispersion comprising the carbon nanotubes according to any one of claims 1 to 6, a dispersant, and a dispersion medium.

9. (Original) An electrode composition, comprising a carbon nanotube dispersion and an electrode active material, and
the carbon nanotube dispersion comprising the carbon nanotubes according to any one of claims 1 to 6, a dispersant, and a dispersion medium.

10. (Original) A secondary cell, comprising an electrode film, and the electrode film
being obtained using a carbon nanotube dispersion which comprises the carbon nanotubes according to any one of claims 1 to 6, a dispersant, and a dispersion medium,
a binder composition which comprises the carbon nanotube dispersion and a binder, or
an electrode composition which comprises the carbon nanotube dispersion and an electrode active material.

11. (Currently amended) A method for purifying carbon nanotubes, comprising:
a first process of heat treating carbon nanotubes comprising multi-walled carbon nanotubes under an inert atmosphere at a temperature of 1000°C or higher and 2000°C or lower; and a second process of contacting the carbon nanotubes heat-treated in the first process with an acid, and
the first process and the second process being each performed once or twice or more, and the acid having a standard electrode potential of 0.8 V vs. SHE or less.

12. (Currently amended) The method for purifying the carbon nanotubes according to claim 11, wherein in the second process, the acid has a standard electrode potential of [[0.8]]0.2 V vs. SHE or less.
